Europäisches Patentamt

European Patent Office

Office européen des brevets

(11) Veröffentlichungsnummer: **0 060 481**
A1

# EUROPÄISCHE PATENTANMELDUNG

(21) Anmeldenummer: **82101821.5**

(22) Anmeldetag: **08.03.82**

(51) Int. Cl.³: **F 16 K 19/00,** F 16 K 11/06

(30) Priorität: **13.03.81 DE 3109617**

(43) Veröffentlichungstag der Anmeldung: **22.09.82**
**Patentblatt 82/38**

(84) Benannte Vertragsstaaten: **AT BE CH DE FR GB IT LI NL SE**

(71) Anmelder: **Rubinetterie Rapetti S.p.A., Via S. Martino della Battaglia 3, I-46043 Castiglione delle Stiviere (IT)**

(72) Erfinder: **Frilli, Giampiero, Via Einaudi 12, I-46043 Castiglione delle Stiviere (IT)**

(74) Vertreter: **Patentanwaltsbüro Cohausz & Fiorack, Postfach 14 01 47, D-4000 Düsseldorf 1 (DE)**

(54) Ventil für eine sanitäre Wassermischarmatur.

(57) Die Erfindung betrifft ein Ventil für eine sanitäre Wassermischarmatur mit einer feststehenden keramischen Ventilsitzscheibe mit drei Öffnungen und einer verschieblichen keramischen Ventilscheibe, die mit einer Seitenfläche auf der Ventilsitzscheibe aufliegt und in dieser Seitenfläche eine Aussparung aufweist, durch die eine erste und zweite Öffnung der drei Öffnungen wahlweise oder gemeinsam mit der dritten Öffnung verbindbar sind, um Kaltwasser, Heißwasser oder ein Gemisch aus beiden dem Armaturenauslauf zuzuführen. Die dritte Öffnung (13) ist an die Kaltwasserzufuhrleitung (9) angeschlossen, wobei das Kaltwasser von der dritten Öffnung (13) über eine Aussparung (8) zu der ersten (11) und/oder zweiten Öffnung (12) je nach Stellung der verschieblichen Ventilscheibe (6) mehr oder weniger fließt. Die erste Öffnung (11) ist an den Einlaß eines Niederdruckwassererhitzers (18) angeschlossen, und die zweite Öffnung (12) und der Auslaß des Niederdruckheißwassererhitzers (18) sind an den Armaturenauslauf (17) angeschlossen.

COHAUSZ & FLORACK
PATENTANWALTSBÜRO

SCHUMANNSTR. 97 · D-4000 DÜSSELDORF
Telefon: (02 11) 68 33 46          Telex: 0858 6513 cop d

PATENTANWÄLTE:
Dipl.-Ing. W. COHAUSZ · Dipl.-Ing. R. KNAUF · Dr.-Ing., Dipl.-Wirtsch.-Ing. A. GERBER · Dipl.-Ing. H. B. COHAUSZ

0060481

- 1 -

Rubinetterie Rapetti S.p.A.
Via S. Martino della Battaglia, 3

I-46043 Castiglione delle Stiviere

Ventil für eine sanitäre Wassermischarmatur

Die Erfindung betrifft ein Ventil für eine sanitäre
Wassermischarmatur mit einer feststehenden keramischen
Ventilsitzscheibe mit drei Öffnungen und einer verschieblichen keramischen Ventilscheibe, die mit einer
Seitenfläche auf der Ventilsitzscheibe aufliegt und
in dieser Seitenfläche eine Aussparung aufweist, durch
die eine erste und zweite Öffnung der drei Öffnungen
wahlweise oder gemeinsam mit der dritten Öffnung verbindbar sind, um Kaltwasser, Heißwasser oder ein Gemisch aus beiden dem Armaturenauslauf zuzuführen.

Aus der US-PS 3 533 436 ist ein derartiges Ventil bekannt. Bei diesem Mischventil sind die erste und zweite
Öffnung der feststehenden Ventilsitzscheibe Wassereinlaßöffnungen für kaltes und heißes Wasser. Dieses
kalte und heiße Wasser wird je nach Stellung der beweglichen Ventilscheibe über die Ausnehmung der Ventilscheibe der dritten Öffnung zugeführt, die als Wasserauslaßöffnung dient und von der das gemischte Wasser

35 029
HC/Be

zum Armaturenauslauf führt. Ein solches Mischventil
weist nur zwei Anschlußleitungen auf und ist für Niederdruckwassererhitzer nicht verwendbar.

Für Niederdruckwassererhitzer, insbesondere elektrische Niederdruckspeicher, sind doppelte Wasserhähne
bekannt, denen beiden Kaltwasser über eine Zufuhrleitung zugeführt wird und von denen ein erster Kaltwasser
dem Aramturenauslauf zuführt, wenn dieses geöffnet ist
und das zweite einem Niederdruckwassererhitzer kaltes
Wasser zuleitet, von dem das erhitzte Wasser dem Armaturenauslauf zugeführt wird. Zwei Ventile sind umständlich und nicht exakt zu betätigen.

Aufgabe der Erfindung ist es, eine Armatur für einen
Niederdruckwassererhitzer zu schaffen, die leicht und
exakt zu bedienen ist und deren Verstellteile gegenüber einem Mischventil konstruktiv nicht geändert werden müssen. Darüber hinaus ist es Aufgabe der Erfindung,
ein Ventil zu schaffen, das sowohl bei Niederdruckwassererhitzern als auch bei Hochdruckwassererhitzern
verwendbar ist.

Diese Aufgaben werden erfindungsgemäß dadurch gelöst,
daß die dritte Öffnung an die Kaltwasserzufuhrleitung
angeschlossen ist, daß das Kaltwasser von der dritten
Öffnung über die Aussparung zu der ersten und/oder
zweiten Öffnung je nach Stellung der verschieblichen
Ventilscheiben mehr oder weniger fließt, daß die erste
Öffnung an den Einlaß eines Niederdruckwassererhitzers
angeschlossen ist und daß die zweite Öffnung und der
Auslaß des Niederdruckheißwassererhitzers an den Armaturenauslauf angeschlossen sind.

Ein solches Ventil weist eine völlig andere Arbeitsweise als ein keramische Scheiben aufweisendes Mischventil auf, da die Fließrichtung innerhalb der Ventilscheiben entgegengesetzt ist. Während bei einem
üblichen an eine Kalt- und eine Heißwasserleitung angeschlossenen Mischventil die beiden zu mischenden Wasserströme von den beiden Wassereinlaßöffnungen zur Wasserauslaßöffnung der Ventilsitzscheibe fließen, ist beim
erfindungsgemäßen Ventil die Fließrichtung umgekehrt.
Obwohl es sich hier nicht um ein Mischventil, sondern
um ein den ankommenden Kaltwasserstrom in zwei Strömungen teilendes Ventil handelt, können bei dieser
Armatur dieselben Ventile verwendet werden, wobei allerdings eine weitere Zuleitung zur bisherigen "Wasserauslaßöffnung" erforderlich ist, die bei den bekannten
Mischventilen zum Armaturenauslauf führte und nunmehr
nicht mehr mit diesem Auslauf, sondern mit der Kaltwasserzufuhrleitung verbunden ist. Der Armaturenauslauf
ist dagegen mit einer der beiden anderen Öffnungen verbunden.

Somit ist es nur mit geringen konstruktiven Änderungen
möglich, ein solches Ventil als auch eine solche Armatur bei Niederdruckwassererhitzern einzusetzen. Dabei
kann ferner dieses Ventil als auch diese Armatur sowohl
bei Niederdruckwassererhitzern als auch bei Hochdruckwassererhitzern verwendet werden. Von besonderem Vorteil ist es, daß das Ventil nur kaltem Wasser ausgesetzt ist, so daß Ablagerungen im Bereich der hochwertigen Ventilscheiben nicht auftreten.

Eine konstruktiv einfache und besonders platzsparende

- 4 -

Bauweise wird dadurch geschaffen, daß Ventilscheibe
und Ventilsitzscheibe in einer aus dem Armaturengehäuse herausnehmbaren Kapsel (Patrone, Kartusche) angeordnet sind und das zum Auslauf führende Mischrohr
(Mischkammer) unterhalb der Kapsel angeschlossen ist.
Hierzu kann auch das zum Auslauf führende Mischrohr
(Mischkammer) von einer die zweite Öffnung mit dem
Erhitzerauslaß verbindenden Leitung abzweigen. Vorzugsweise wird vorgeschlagen, daß jede der drei Öffnungen
der Ventilsitzscheibe mit je einer aus der Armatur
herausführenden Leitung verbunden ist.

Ein Ausführungsbeispiel der Erfindung ist in den Zeichnungen dargestellt und wird im folgenden näher beschrieben. Es zeigen:

Fig. 1      eine schematische Darstellung einer Armatur
            mit darunter befindlichem Niederdruckwassererhitzer;

Fig. 2      einen senkrechten Schnitt nach II-II in
            Fig. 1;

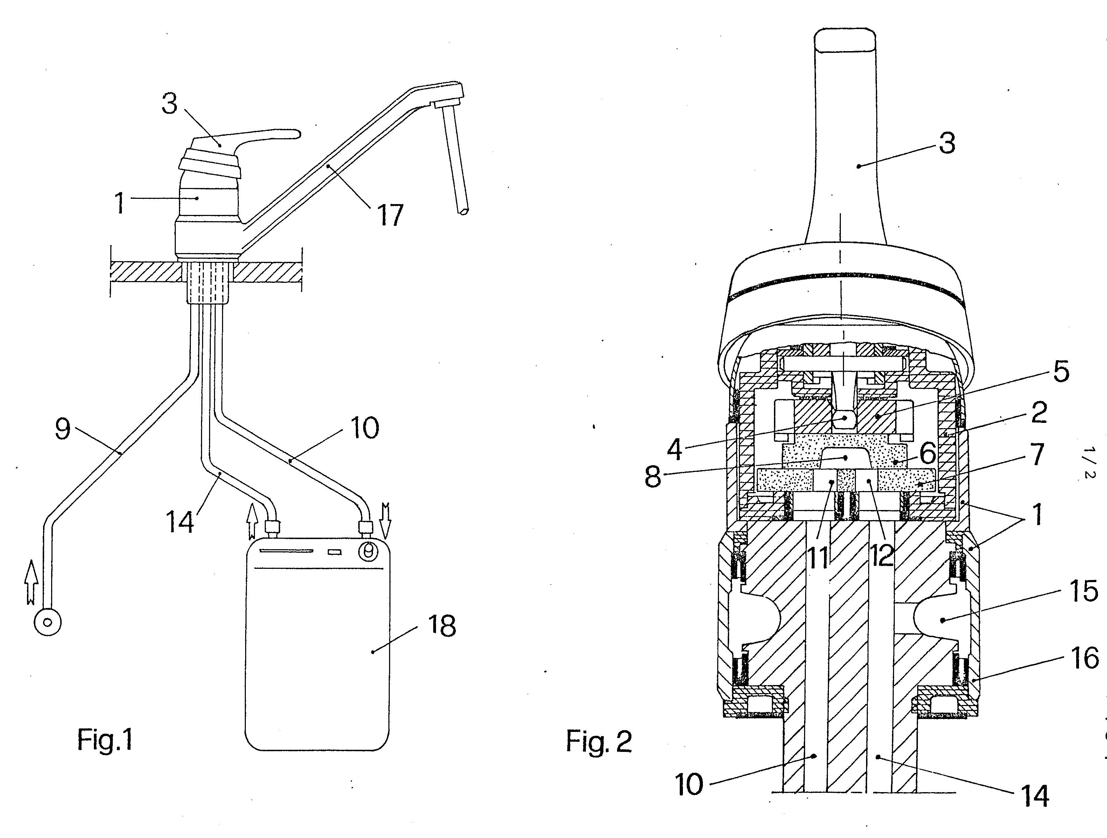

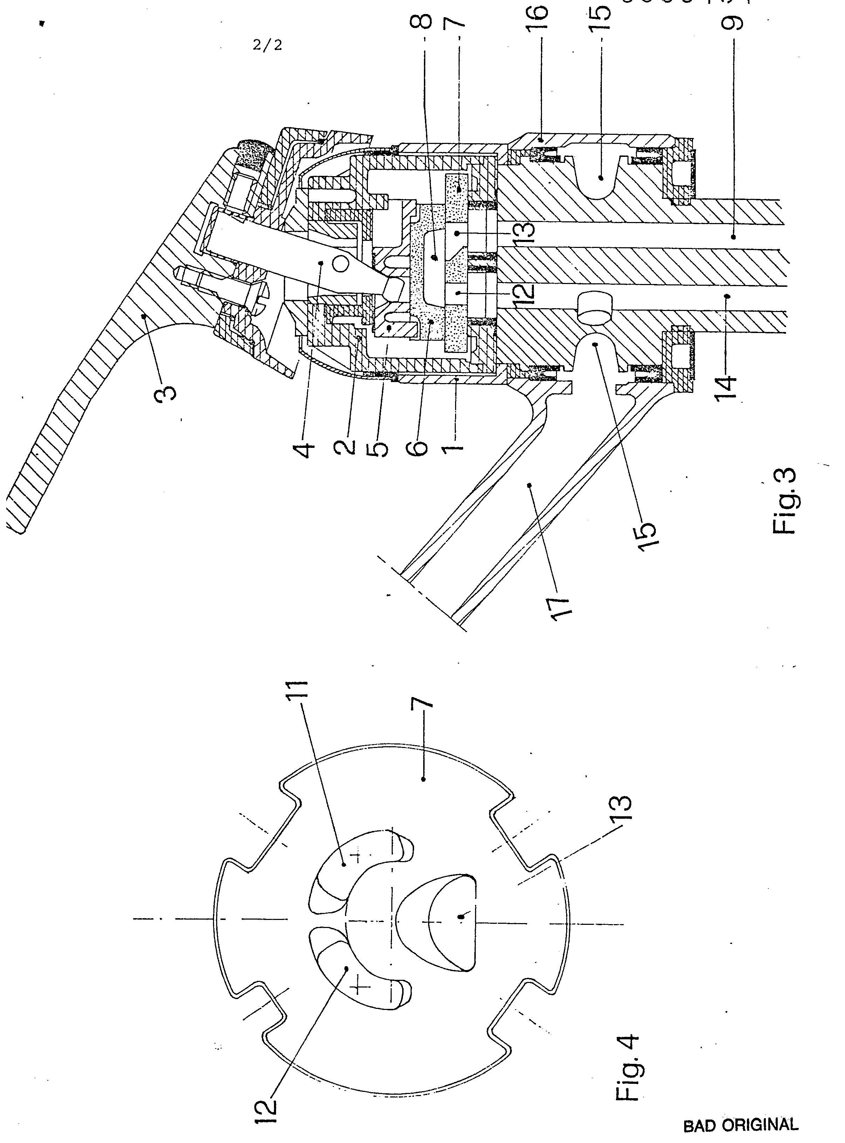

Fig. 3      einen Schnitt nach III-III in Fig. 2; und

Fig. 4      eine Draufsicht auf eine Ventilsitzscheibe.

Die Armatur weist ein zylindrisches Gehäuse 1 auf, das
mit seiner Achse senkrecht steht, und in dem eine Kapsel
2 (Patrone, Kartusche) im oberen Bereich koaxial befestigt ist. Über der Kapsel ist ein Handhebel 3 um eine
waagerechte und eine senkrechte Achse verschwenkbar gelagert, an dessen Unterseite ein in die Kapsel hineinreichender Finger 4 befestigt ist, der mit seinem Ende
in einer Sackbohrung einer Trägerscheibe 5 einliegt.
Die waagerechte Trägerscheibe 5 führt mit ihrer Unterseite eine waagerechte bewegliche Ventilscheibe 6, die
auf einer waagerechten Ventilsitzscheibe 7 verschieblich aufliegt und in ihrer Unterseite eine Aussparung
8 aufweist. Die Aussparung 8 verbindet wahlweise drei
Öffnungen 11, 12, 13 in der Ventilsitzscheibe 7, wobei
die Ventilscheibe 6 derart bewegt werden kann, daß die
Aussparung 8 nur über der Öffnung 12 liegt und damit
aus der Öffnung 13 kein Wasser zu den Öffnungen 11 oder
12 fließen kann (das Ventil ist geschlossen), oder aber
die Aussparung 8 verbindet die Öffnung 13 nur mit der
Öffnung 11 (es tritt nur heißes Wasser aus dem Auslauf
aus). Ferner kann durch Aussparung 8 nur die Öffnung
12 mit der Öffnung 13 verbunden werden (es tritt nur
kaltes Wasser aus), und schließlich können Zwischenstellungen eingenommen werden, wodurch kaltes Wasser
aus der Öffnung 13 sowohl zur Öffnung 11 als auch zur
Öffnung 12 fließt (es tritt Mischwasser aus). An der
dritten Öffnung 13 ist eine Kaltwasserzufuhrleitung 9
angeschlossen, so daß durch die dritte Öffnung 13 in
die Aussparung 8 eintretendes Wasser je nach Stellung
der beweglichen Ventilscheibe 6 durch die Öffnung 11
und/oder 12 mehr oder weniger austritt, so daß die Ventilscheibe und die Ventilsitzscheibe nur mit kaltem
Wasser in Berührung kommen.

Das durch die erste Öffnung 11 austretende Kaltwasser
wird durch eine Leitung 10 zu einem Niederdruckwassererhitzer, insbesondere einem elektrischen Niederdruckspeicher erhitzt, an dessen Auslaß eine Heißwasserleitung 14 angeschlossen ist, die das Wasser zur Armatur zurückführt. Die Heißwasserleitung 14 führt bis zur zweiten Öffnung der Ventilsitzscheibe 7. Allerdings gelangt das heiße Wasser bei einer mittleren Mischstellung nicht bis zur Öffnung 12, da durch die Öffnung 12 Kaltwasser entgegenströmt. Diese beiden Wasserströme mischen sich in der ringförmigen Kammer 15, die unterhalb der Kapsel 2 angeordnet ist und von einer Hülse 16 umgeben ist, die den Auslauf 17 trägt, der mit der Mischkammer 15 verbunden ist.

Diese Armatur kann jederzeit als Armatur für Hochdruckwassererhitzer benutzt werden, wenn der im unteren Teil des Gehäuses befindliche Metallblock, der den oberen Teil der Leitung 19 und 14 bildet, gegen einen anderen Metallblock ausgewechselt wird, dessen Leitung 10 mit der Kaltwasserzufuhrleitung, dessen Leitung 14 mit der Heißwasserzufuhrleitung und dessen Leitung 9 mit dem Auslauf 17 verbunden ist.

# COHAUSZ & FLORACK

## PATENTANWALTSBÜRO

### SCHUMANNSTR. 97 · D-4000 DÜSSELDORF
Telefon: (02 11) 68 33 46          Telex: 0858 6513 cop d

---

PATENTANWÄLTE:
Dipl.-Ing. W. COHAUSZ · Dipl.-Ing. R. KNAUF · Dr.-Ing., Dipl.-Wirtsch.-Ing. A. GERBER · Dipl.-Ing. H. B. COHAUSZ

---

10.1.81

– 7 –

Ansprüche

1. Ventil für eine sanitäre Wassermischarmatur mit einer feststehenden keramischen Ventilsitzscheibe mit drei Öffnungen und einer verschieblichen keramischen Ventilscheibe, die mit einer Seitenfläche auf der Ventilsitzscheibe aufliegt und in dieser Seitenfläche eine Aussparung aufweist, durch die eine erste und zweite Öffnung der drei Öffnungen wahlweise oder gemeinsam mit der dritten Öffnung verbindbar sind, um Kaltwasser, Heißwasser oder ein Gemisch aus beiden dem Armaturenauslauf zuzuführen, d a d u r c h   g e k e n n z e i c h n e t ,

daß die dritte Öffnung (13) an die Kaltwasserzufuhrleitung (9) angeschlossen ist, daß das Kaltwasser von der dritten Öffnung (13) über die Aussparung (8) zu der ersten (11) und/oder zweiten Öffnung (12) je nach Stellung der verschieblichen Ventilscheibe (6) mehr oder weniger fließt, daß die erste Öffnung (11) an den Einlaß eines Niederdruckwassererhitzers (18) angeschlossen ist und daß die zweite Öffnung (12) und der Auslaß des Niederdruckheißwassererhitzers (18) an den Armaturenauslauf (17) angeschlossen sind.

35 029
HC/Be

2. Ventil nach Anspruch 1, d a d u r c h   g e -
k e n n z e i c h n e t , daß Ventilscheibe (6)
und Ventilsitzscheibe (7) in einer aus dem Armaturengehäuse (11) herausnehmbaren Kapsel (Patrone,
Kartusche) (2) angeordnet sind und das zum Auslauf
(17) führende Mischrohr (Mischkammer) (15) unterhalb
der Kapsel (2) angeschlossen ist.

3. Ventil nach Anspruch 1 oder 2, d a d u r c h   g e -
k e n n z e i c h n e t , daß das zum Auslauf (17)
führende Mischrohr (Mischkammer) (15) von einer die
zweite Öffnung (12) mit dem Erhitzerauslaß verbindenden Leitung (14) abzweigt.

4. Ventil nach einem der Ansprüche 1 bis 3, d a -
d u r c h   g e k e n n z e i c h n e t , daß jede
der drei Öffnungen (11, 12, 13) der Ventilsitzscheibe
(7) mit je einer aus der Armatur herausführenden
Leitung (9, 10, 14) verbunden ist.

Fig.1

Fig. 2

1/2

0060481

Fig. 4

Fig. 3

0060481

Europäisches Patentamt

**EUROPÄISCHER RECHERCHENBERICHT**

006O481

Nummer der Anmeldung

EP 82101821.5

| EINSCHLÄGIGE DOKUMENTE | | | KLASSIFIKATION DER ANMELDUNG (Int Cl ) |
|---|---|---|---|
| Kategorie | Kennzeichnung des Dokuments mit Angabe, soweit erforderlich, der maßgeblichen Teile | betrifft Anspruch | F 16 K 19/00 |
| D,A | DE - B2 - 1 949 318 (STANDARD) <br> * Spalte 3, Zeile 40 - Spalte 16, Zeile 20; Fig. 1-9 * <br> &· US-A-3 533 436 <br> -- | 1 | F 16 K 11/06 |
| A | DE - A1 - 2 801 657 (ORAS OY) <br> * Seite 5, Zeile 5 - Seite 7, Zeile 20; Fig. 1,4 * <br> -- | 1,2 | |
| A | DE - A1 - 2 609 170 (ORAS OY) <br> * Fig. 1 * <br> ---- | 1,2,3, 4 | **RECHERCHIERTE SACHGEBIETE** (Int. Cl.) <br><br> F 16 K 11/00 <br> F 16 K 19/00 <br> F 16 K 31/00 |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

X  Der vorliegende Recherchenbericht wurde für alle Patentansprüche erstellt.

| Recherchenort | Abschlußdatum der Recherche | Prüfer |
|---|---|---|
| WIEN | 21-06-1982 | ROUSSARIAN |

EPA form 1503.1   06.78